## Europäisches Patentamt

## European Patent Office

## Office européen des brevets

(19)

(11) Veröffentlichungsnummer: **0 106 241**
**B1**

(12) **EUROPÄISCHE PATENTSCHRIFT**

(45) Veröffentlichungstag der Patentschrift:
**22.07.87**

(21) Anmeldenummer: **83109792.8**

(22) Anmeldetag: **30.09.83**

(51) Int. Cl.⁴: **C 08 G 81/00,** C 08 G 69/48, C 08 L 77/00

(54) **Schlagzähe Polyamide.**

(30) Priorität: **08.10.82 DE 3237401**

(43) Veröffentlichungstag der Anmeldung:
**25.04.84 Patentblatt 84/17**

(45) Bekanntmachung des Hinweises auf die Patenterteilung:
**22.07.87 Patentblatt 87/30**

(84) Benannte Vertragsstaaten:
**DE FR GB IT**

(56) Entgegenhaltungen:
**EP-A-0 037 430**
**EP-A-0 058 329**
**BE-A-716 954**
**DD-A-205 441**
**FR-A-2 219 211**
**FR-A-2 220 603**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Müssig, Bernhard, Dr., Eddelsener Weg 31, D-2105 Seevetal 1 (DE)**
Erfinder: **Meyer, Rolf-Volker, Dr., Buchheimer Strasse 23, D-4150 Krefeld (DE)**
Erfinder: **Brassat, Bert, Bethelstrasse 24, D-4150 Krefeld (DE)**
Erfinder: **Dhein, Rolf, Dr., Deswatinesstrasse 30, D-4150 Krefeld 1 (DE)**

EP 0 106 241 B1

## Beschreibung

Die Erfindung betrifft schlagzähe, leicht fließfähige Polyamidformmassen, in die ein langkettiges Polyol und wenigstens ein Polyanhydrid und/oder ein Polyepoxid eingearbeitet worden sind.

Die Schlagzähigkeit von Formkörpern aus Polyamiden hängt erheblich vom Wassergehalt der Formkörper ab. Im wasserfreien Zustand, z. B. nach der Herstellung der Formkörper durch Spritzgießen, sind besonders die aus leicht fließfähigen und damit leicht verarbeitbaren Polyamid-Spritzgußmassen mit mittleren Molekulargewichten und hier wiederum die aus hochkristallinen Polyamiden hergestellten Formkörper relativ empfindlich gegen Schlagbeanspruchung.

Höhermolekulare Polyamide, wie sie vorzugsweise für die Extrusionsverarbeitung eingesetzt werden, liefern zwar weniger schlagempfindliche Formkörper, sind jedoch infolge ihrer stark erhöhten Schmelzviskosität und der daraus resultierenden schlechteren Fließfähigkeit schwieriger zu verarbeiten.

Darüber hinaus erfordert die Herstellung höher viskoser Polyamide häufig eine teure und aufwendige Festphasennachkondensation.

Es besteht daher ein Bedarf nach rasch verarbeitbaren, leicht fließfähigen Polyamidformmassen, aus denen sich Formkörper herstellen lassen, die in trockenem Zustand eine erhöhte Schlagzähigkeit besitzen. Insbesondere sind solche Polyamide von Interesse, die hohe Zugfestigkeit und leichte Verarbeitbarkeit kombiniert mit einer hohen Schlagzähigkeit und Flexibilität aufweisen.

Es sind bereits verschiedene Verfahren zur Erhöhung der Zähigkeit und Flexibilität von Polyamiden bekannt. So z. B. das Einmischen von niedermolekularen Weichmachern in Polyamide, das aber aus mehreren Gründen keine zufriedenstellende Lösung des Problems bringt. Der größte Teil der für Kunststoffe geeigneten Weichmacher ist mit Polyamiden nicht genügend verträglich und entmischt sich beim Verarbeiten bzw. neigt zum Ausschwitzen. Verträgliche Weichmacher, die mit Polyamiden echte Lösungen bilden, verschlechtern aber meist die guten mechanischen Eigenschaften der Polyamide. Stark polare Stoffe mit niedrigem Molekulargewicht wie Wasser oder Dimethylformamid bewirken zwar eine Verbesserung der Zähigkeit. Sie können jedoch erst nach der Herstellung von Polyamidformkörpern in diese eingearbeitet werden, da sonst bei der Verarbeitung von entsprechend vorbehandelten Polyamidgranulaten wegen der relativ niederen Siedepunkte dieser Zusätze blasenhaltige Formkörper entstehen würden.

Dadurch ist dieses Verfahren im allgemeinen zu zeit- und kostenaufwendig und für die Herstellung dickwandiger Formteile wegen der unregelmäßigen Verteilung der Zusätze unbrauchbar.

Nach anderen Verfahren wird die Schlagzähigkeit von Polyamiden durch Zumischen von bestimmten polymeren Stoffen verbessert. So wurden Polyethylene und Copolymerisate aus Vinylacetat und Ethylen mit mäßigem Erfolg eingesetzt.

Bessere Resultate konnten z. B. mit $CO_2H$-Gruppen enthaltenden olefinischen Copolymeren sowie mit entsprechenden Pfropfpolymeren erzielt werden.

Dies gilt auch für die Modifikation mit Kautschukpolymeren, wie z. B. mit gepfropften Acryl- oder Polybutadien-Kautschukteilchen oder Weichblöcken, die durch Polykondensation in das Polyamid eingebaut werden. Die Zähigkeit ist für einige Anwendungszwecke nicht ausreichend.

Zur Herstellung höhermolekularer Polyamide unter Umgehung der Festphasennachkondensation ist eine Vielzahl von Versuchen mit dem Ziel der Verzweigung oder Vernetzung durchgeführt worden.

Prinzipiell sind dazu z. B. mehrfunktionelle Epoxide und besonders mehrfunktionelle Isocyanate geeignet.

Diese Verfahren führen in der Tat zu Produkten höherer Zähigkeit. Die Schmelzviskositäten der Produkte nehmen aber ebenfalls so stark zu, daß eine Verarbeitung im Spritzgießverfahren sehr schwierig wird.

Aus der FR-A-2 220 603 sind Fasern aus Polyamid bekannt, die Antistatika enthalten, die Reaktionsprodukte von oxyalkylierten Tetrolen auf Diaminbasis mit Diepoxiden sind.

Überraschenderweise wurde nun gefunden, daß man schlagzähe und leichtfließende Polyamid-Formmassen erhält, die die genannten Nachteile nicht aufweisen, wenn man Polyamide sowohl mit langkettigen Polyolen als auch mit Polyanhydriden, Polyepoxiden kombiniert. Die daraus hergestellten Formkörper zeigen eine deutlich verbesserte Zähigkeit, die bei Formkörpern aus unmodifizierten Polyamiden nur bei Einsatz von Polyamiden mit einem erheblich höheren Molekulargewicht beobachtet wird. Die Herstellung dieser Formkörper ist aber wegen des schlechteren Fließverhalten des hochmolekularen Polyamids erschwert.

Gegenstand der Erfindung sind daher leicht fließfähige, thermoplastisch verarbeitbare Polyamid-Formmassen, hergestellt aus

1. 70-98,95 Gew.-% vorzugsweise 85-97,9, besonders bevorzugt 92-96,9, eines thermoplastisch verarbeitbaren Polyamids,

2. 1-30, vzw. 2-15, und ganz besonders bevorzugt 3-8 Gew.-%, wenigstens eines langkettigen Polyols auf Basis von Polyestern, Polyethern oder Kohlenwasserstoffen mit einem Zahlenmittel des Molekulargewichts $(M_n)$ von 500-20000, vorzugsweise 1000-5000, und ganz besonders bevorzugt 1500-2500, einem Erweichungspunkt $\leq 100°C$ und einer Funktionalität von 1-4, vorzugsweise 2 und

3. 0,05-5 Gew.-%, vorzugsweise 0,1-3 Gew.-%, mindestens eines Polyanhydrids und/oder Polyepoxids, vorzugsweise Polyanhydrids mit einer Funktionalität von mindestens 5,

wobei die Summe der Komponenten 1-3 immer 100 Gew.-% ergeben muß und wobei, im Falle daß Komponente 2) ein Polyether-Polyol und Komponente 3) ein Polyepoxid ist, als Polyether-Polyol ein Oxalkylierungsprodukt von Wasser, Ammoniak oder 1-4 wertigen Alkoholen, oder ein Polyether hergestellt aus Ringethern oder deren Umstetzungsprodukte mit Alkylenoxid verwendet werden.

Zu den geeigneten Polyolen auf Kohlenwasserstoff-Basis gehören die sog. Telechele, z. B. Polybutadien- und Isoprenpolyole, insbes. in hydrierter Form. Technische Produkte dieser Art sind Poly bd Resin® R 45 HT (Arco Chem. Co) oder Nisso PB Resin® G 2000 (Nippon Soda Co.).

Geeignete Polyetherpolyole leiten sich von Oxalkylierungsprodukten von Wasser, Ammoniak, Aminen und 1-4-wertigen Alkoholen, wie z. B. von Ethylenglykol, Propandiol-1,3, Neopentylglykol, Butandiol-1,4, Hexandiol-1,6, Decandiol-1,10, Glycerin, Trimethylolpropan, Pentaerythrit, 4,4'-Dihydroxydicyclohexyl-2,2-propan oder Bisphenol A mit 1,2-Alkylenoxiden wie Ethylenoxid oder Propylenoxid oder deren Mischungen ab. Weiterhin geeignet sind Polyether hergestellt aus Ringethern wie Tetrahydrofuran oder dessen Copolymere mit 1,2-Alkylenoxiden.

Geeignete Polyesterpolyole werden aus bekannten Polyolen, insbesondere aus den oben genannten, und aus mindestens einer Polycarbonsäure oder deren Anhydriden, insbesondere Dicarbonsäuren wie Bernsteinsäure, Glutarsäure, Adipinsäure, Sebacinsäure, Phthalsäure, Isophthalsäure, Terephthalsäure, Hexahydrophthalsäure, Tetrahydrophthalsäure, Endomethylentetrahydro-phthalsäure oder Methylhexahydrophthalsäuren, sowie gegebenenfalls aus Hydroxycarbonsäuren bzw. deren Lactonen, hergestellt.

Wegen ihrer besonders guten Verträglichkeit mit Polyamiden sind Polyether- und Polyesterpolyole besonders geeignet. Polyesterpolyole haben zusätzlich den Vorteil höherer Thermostabilität.

Als Polyepoxid-Verbindungen eignen sich besonders Polyglycidylether mehrwertiger Phenole wie beispielsweise solche von Bisphenol A, weiterhin Glycidether mehrwertiger Alkohole, vorzugsweise Diole, beispielsweise von Butan-diol-1,4.

Darüber hinaus sind Glycidylester mehrwertiger aromatischer, vorzugsweise $C_8$-$C_{19}$, aliphatischer, vorzugsweise $C_4$-$C_{18}$ und cycloaliphatischer, vorzugsweise $C_8$-$C_{19}$, Polycarbonsäuren, vorzugsweise Dicarbonsäuren, wie z. B. Phthalsäure-, Hexahydrophthalsäure- und Adipinsäure-diglycidester geeignet.

Die genannten Epoxide können auch durch Umsetzung mit aliphatischen oder aromatischen Dicarbonsäuren, Dimercaptanen, Schwefelwasserstoff, Ammoniak oder Aminen bereits vorverlängert sein. Weitere geeignete Polyepoxide sind Polymerisate von Glycidylmethacrylat oder Glycidylacrylat, insbesondere Copolymerisate mit einfach ungesättigten Monomeren, vorzugsweise mit $C_2$-$C_{10}$ wie Styrol, Acrylnitril, Methylmethacrylat oder Methylacrylat.

Bevorzugte Polyepoxide sind Copolymerisate von Glycidylmethacrylat mit Methylmethacrylat und/oder Styrol oder Bisglycidylether des Bisphenol A.

Als Polyanhydride eignen sich Vorzugsweise solche auf Basis cyclischer Anhydride, gegebenenfalls ungesättigte aliphatische, oder aromatische Polycarbonsäureanhydride mit $C_8$-$C_{200}$, vorzugsweise von Dicarbonsäuren. Besonders geeignet sind Anhydridverbindungen, die sich von gegebenenfalls substituiertem Maleinsäureanhydrid ableiten, und zwar

1. Addukte von Maleinsäureanhydrid an Polybutadienöle mit Molekulargewichten ($M_w$) oder von 200-4000.

2. Copolymere von Maleinsäureanhydrid mit $\alpha$, $\beta$-einfach ungesättigten Monomeren wie Styrol, Ethylen, (Meth)acrylester, Acrylnitril mit Schmelzpunkten bzw. Erweichungsbereichen unter 300°C, deren Mol.-Gewichte $M_w$ bis über 100.000 betragen können.

Verbindungen mit einer Funktionalität von mindestens 5, wie sie bei den Copolymeren des Maleinsäureanhydrids oder des Glycidylmethacrylats leicht zugänglich sind, werden besonders bevorzugt, da sie außerdem Formkörper mit ausgezeichneten Oberflächenqualitäten ermöglichen.

Als Polyamide im Sinne der Erfindung können lineare Polykondensate von Lactamen mit wenigstens 5 Kohlenstoffatomen im Ring bzw. übliche Polykondensate aus Diaminen und Dicarbonsäuren, wie 6-, 6,6-, 6,7-, 6,8-, 6,9-, 6,10-, 6,12-, 8,8-, 12,12-Polyamid, oder Polykondensate aus aromatischen Dicarbonsäuren wie Isophthalsäure, Terephthalsäure mit Diaminen wie Hexamethylendiaminen. Octamethylendiamin, aus araliphtaischen Ausgangsstoffen wie m- oder p-Xylylendiaminen und Adipinsäure, Korksäure, Sebazinsäure und Polykondensate auf Basis von alicyclischen Ausgangsstoffen wie Cyclohexandicarbonsäure, Cyclohexandiessigsäure, Diamino-dicyclohexylmethanen, Isophorondiamin verwendet werden.

Gleichermaßen können Gemische der genannten Polyamide oder aus den genannten Bausteinen erhältliche Copolyamide Verwendung finden.

Vorzugsweise werden teilkristalline Polyamide verwendet.

Die rel. Viskosität der einzusetzenden Polyamide sollte mindestens 1,8 (gemessen in 1 %iger Lösung in m-Kresol bei 25°C) betragen.

Besonders bevorzugt werden die üblicherweise für technische Spritzgußartikel eingesetzten 6-, 6,6-, 6,9-, 6,10-, 6,12-, 11- und 12 Polyamide verwendet sowie Copolyamide, die zum überwiegenden Anteil auf Basis der obengenannten Polyamide aufgebaut sind und deren relative Viskosität 1,8-5,0, vorzugsweise 2,0-3,5, gemessen wie oben angegeben, beträgt.

Anstelle von Polyamiden lassen sich Polymerlegierungen einsetzen, die überwiegend, vorzugsweise zu mindestens 70 Gew.-% aus Polyamiden bestehen und deren Legierungs-Komponente prinzipiell bekannte elastifizierende Polymere wie z. B. Polyolefine, olefinische Copolymerisate, vorzugsweise solche mit Anteilen an eingebauten polaren Gruppen bzw. auch entsprechende Pfropf-(Co)-polymerisate sein können.

Produkte dieser Art sind z. B. aus der DAS 1 241 606 oder DOS 2 758 568 bekannt.

Zur Herstellung der erfindungsgemäßen modifizierten Polyamide werden die Polyamidkomponente und die Modifikatoren vorzugsweise oberhalb des Schmelzpunktes des Polyamids miteinander vermischt. Dies kann z. B. unmittelbar nach der Herstellung des Polyamids durch Vermischen der Modifikatoren mit der als Strang abzuspinnenden Schmelze erfolgen. Vorzugsweise werden die erfindungsgemäß modifizierten Polyamide durch Mischen der Komponenten in üblichen Schneckenmaschinen hergestellt.

Dieses Verfahren wird insbesondere gewählt, wenn neben Polyamiden weitere Polymere zur Herstellung entsprechend modifizierter Polymerlegierungen eingesetzt werden oder andere Additive wie Stabilisatoren, Entformungsmittel, Gleitmittel, Kristallisationsbeschleuniger, Weichmacher, Pigmente, Farb-, Verstärkungs- und/oder Füllstoffe, wie Glasfasern oder Asbest, eingearbeitet werden.

Zur Compoundierung eignen sich übliche bekannte Apparaturen. Doppelschneckenextruder werden bevorzugt eingesetzt.

Die erfindungsgemäßen Formmassen zeichnen sich durch eine überraschend gute Fließfähigkeit aus, die über Menge und Art der Modifikatoren eingestellt werden kann. Der Biegemodul bleibt bei der Modifizierung im wesentlichen unverändert.

Die erfindungsgemäß modifizierten Polyamide sind besonders leichtfließende Produkte, die sich in handelsüblichen Spritzgießmaschinen problemlos zu Formkörpern verarbeiten lassen. Diese zeichnen sich durch eine verbesserte Kerbschlagzähigkeit aus und weisen außerdem die sonstigen für Polyamide typischen, hohen Gebrauchseigenschaften auf.

Formkörper aus den erfindungsgemäßen Polyamidformmassen lassen sich auch ohne zusätzliche übliche Additive besser entformen als unmodifizierte Produkte und zeichnen sich obendrein durch eine sehr gute Oberflächenbeschaffenheit aus.

In den Beispielen verwendete Modifikatoren sind:

## Typ I

A: Polyester aus Dimerfettsäure (Empol 1010®, Unilever Emery) und Hexandiol, OH-Zahl 56, Säurezahl 1,
B: Polyester aus Adipinsäure, Ethylenglycol und Butandiol-(1,4), Säurezahl 0, OH-Zahl 56,
C: Polyether aus Propylenoxid und Ethylenoxid, OH-Zahl 56, gestartet auf Ethandiol
D: Polybutadienöl R 45 HT®, OH-Zahl 47

## Typ II

E: Copolymer aus 40 Gew.-% Styrol, 40 Gew.-% Methylmethacrylat und 20 Gew.-% Glycidylmethacrylat, ($M_w \sim$ 15.000)
F: Copolymer aus je 50 Mol-% Maleinsäureanhydrid und Diisobutylen, (mittleres Mol-Gew. $M_w \approx$ 20.000)
G: Copolymer aus 10 Gew.-% Maleinsäureanhydrid und 90 Gew.-% Styrol, (mittleres Mol-Gew. $M_w \approx$ 100.000)
H: Bisphenol A-bisglycidether, (Lekutherm X 20®)

## Herstellung der modifizierten Polyamide

### Beispiel 1

96,7 Gew.-Tle. eines 6-Polyamids mit einer rel. Viskosität von 2,9, gemessen in 1 %iger Lösung in m-Kresol bei 25°C, einer nach DIN 53 453 bestimmten Kerbschlagzähigkeit von 2,3 kJ/m[2] und einer Fließlänge[x] von 55 cm, 3 Gew.-Tle. des Polyesters A und 0,3 Gew.-Tle. eines Epoxyharzes E werden getrennt mittels einer Dosierwaage bzw. einer Dosierpumpe in einen Zweiwellenextruder vom Typ ZSK 53 gefördert und bei 260°C mit 90 UpM extrudiert. Die homogene Schmelze wird als Strang in ein Wasserbad abgesponnen, granuliert und bei 80-100°C bis zu einem Wassergehalt von weniger als 0,1 Gew.-% getrocknet.

Die Polyamidformmasse hat eine rel. Viskosität von 2,8, gemessen wie oben angegeben, eine Kerbschlagigkeit von 7,2 kJ/m[2] und eine Fließlänge von 58 cm.

x) Die Fließlänge ist ein Maß für die Fließfähigkeit eines Produktes und damit für seine Verarbeitbarkeit; höhere Fließlänge bedeutet bessere Fließfähigkeit und damit kürzere Spritzcyclen. Die Fließlänge wurde wie folgt bestimmt: In ein spezielles Werkzeug, das auf 90°C gehalten wird, wird mittels einer Spritzgießmaschine, deren Zylindertemperatur 260°C beträgt, die zu untersuchende Probe mit einem Spritzdruck von 72 bar eingespritzt. Besonders leichtfließende Werkstoffe sind in der Lage, unter diesen Bedingungen das Werkzeug zu füllen, so daß man nachher eine 100 cm lange Spirale entnehmen kann. Weniger fließfähige Werkstoffe füllen unter den beschriebenen Bedingungen das Werkzeug nur teilweise; dann können infolge der vorzeitigen Erstarrung der Schmelze nur Spiralkörper von < 100 cm Länge erhalten werden. Als Fließlänge wird die Länge in cm angegeben, die 5 mal reproduziert wurde.

**Beispiel 2-5**

Die Abmischungen wurden wie Beispiel 1 durchgeführt, jedoch unter Variation von Menge und Typ des Polyols. Die Ergebnisse sind in Tabelle 1 zusammengestellt.

**Vergleichsversuch 1**

Das unmodifizierte Polyamid aus Beispiel 1 wurde ohne Additive extrudiert.

**Vergleichsversuch 2**

Caprolactam wird durch übliche Polykondensation in einem Autoklaven hergestellt, wobei 1,2 Gew.-% Essigsäure als Kettenabbrecher verwendet wird. Das Produkt ist gut fließfähig, hat aber keine ausreichende Zähigkeit.

**Vergleichsversuch 3**

Bei einem Polyamid-6 werden durch Festphasen-Nachkondensation die relative Viskosität auf 4,2 und die Kerbschlagzähigkeit erhöht. Dabei vermindert sich die Fließfähigkeit. Die Eigenschaften zeigt Tab. 1.

**Vergleichsversuch 4**

Polyamid-6 aus Beispiel 1 wurde wie beschrieben extrudiert, es wird jedoch nur je eine der beiden notwendigen Modifikatoren eingearbeitet. Die Zähigkeit ist nur geringfügig erhöht und die Fließfähigkeit verschlechtert.

**Tabelle 1**

| Beispiel | | Modifikator I | | Modifikator II | | Kerbschlag-zähligkeit (kJ/m$^2$) | Fließlänge (cm) |
| | | Typ | Gew.-% | Typ | Gew.-% | | |
|---|---|---|---|---|---|---|---|
| | 1 | A | 3 | E | 0,3 | 7,2 | 58 |
| | 2 | B | 3 | E | 0,3 | 6,4 | 55 |
| | 3 | D | 6 | E | 0,3 | 9,5 | 93 |
| | 4 | C | 3 | E | 0,3 | 5,4 | 57 |
| | 5 | C | 6 | E | 0,3 | 11,3 | 63 |
| Vgl. | 1 | - | - | - | - | 2,3 | 55 |
| | 2 | - | - | - | - | 0,9 | 100 |
| | 3 | - | - | - | - | 4,5 | 30 |
| | 4 | C | 3 | - | - | 3,4 | 58 |

**Beispiel 6-10**

Die Versuche wurden analog Beispiel 1 durchgeführt. Tabelle 2 zeigt die Wirksamkeit der verschiedenen Polyanhydride und -epoxide.

**Beispiel 11**

Pa-6,6 ($\eta_{rel}$ 2,8, gemessen an einer 1 %igen Lösung in m-Kresol bei 25°C) wurde wie in Beispiel 1 beschrieben, mit 6 Gew.-% Modifikator C und 0,5 Gew.-% Modifikator E compoundiert.

| Polyamid | unmodifiziert | modifiziert |
|---|---|---|
| $a_k$ (kJ/m²) | 1,8 | 4,6 |
| Fließl. (cm) | 68 | 74 |

**Beispiel 12**

Ein Polyamid aus Isophthalsäure und Hexamethylendiamin ($\eta_{rel}$ 2,4, gemessen an einer 1 %igen Lösung in m-Kresol bei 25°C) wurde analog Beispiel 1 mit 6 Gew.-% Modifikator B und 0,5 Gew.-% Modifikator G compoundiert.

| Polyamid | unmodifiziert | modifiziert |
|---|---|---|
| $a_k$ (kJ/m²) | 3,1 | 5,0 |
| Fließl. (cm) | 25 | 25 |

**Tabelle 2**

| Beispiel | Modifikator I | | Modifikator II | | Kerbschlag-zähligkeit (kJ/m²) | Fleißlänge (cm) |
|---|---|---|---|---|---|---|
| | Typ | Gew.-% | Typ | Gew.-% | | |
| 6 | C | 3 | F | 0,3 | 6,7 | 60 |
| 7 | C | 3 | G | 0,5 | 7,1 | 55 |
| 8 | C | 6 | H | 0,3 | 8,2 | 68 |
| 9 | C | 3 | G | 0,5 | 7,1 | 55 |
| 10 | C | 6 | G | 0,5 | 10,9 | 58 |

**Patentansprüche**

1. Thermoplastisch verarbeitbare Polyamid-Formmassen, hergestellt aus
1) 70-98,95 Gew.-% eines thermoplastisch verarbeitbaren Polyamids,
2) 1-29,95 Gew.-% wenigstens eines langkettigen Polyester-, Polyether- oder Kohlenwasserstoff-Polyols mit einem Zahlenmittel des Molekulargewichts (Mn) von 500-20 000, einem Erweichungspunkt $\leq 100$°C und einer Fnktionalitä von 1-4 und
3) 0,05 bis 5 Gew.-% mindestens eines Polyanhydrids mit einer Funktionalität von wenigstens 5 und/oder Polyepoxides und gegebenenfalls üblichen Hilfs- und Zuschlagsstoffen,
wobei die Summe der Komponenten 1.-3. immer 100 Gew.-% ergeben muß und wobei, im Falle daß Komponente 2) ein Polyether-Polyol und Komponente 3) ein Polyepoxid ist, als Polyether-Polyol ein Oxalkylierungsprodukt von Wasser, Ammoniak oder 1-4 wertigen Alkoholen, oder ein Polyether hergestellt aus Ringethern oder deren Umsetzungsprodukte mit Alkylenoxid verwendet werden.

2. Formmassen nach Anspruch 1, dadurch gekennzeichnet, daß sie aus
85-97,9 Gew.-% der Komponente 1)
2-14,9 Gew.-% der Komponente 2) und
0,1-3 Gew.-% der Komponente 3)
hergestellt werden.

3. Formmassen nach Anspruch 1 oder 2, dadurch gekennzeichnet, daß sie aus
92-96,9 Gew.-% der Komponente 1)
3- 7,9 Gew.-% der Komponente 2) und
0,1-3 Gew.-% der Komponente 3)
hergestellt werden.

4. Formmassen nach Ansprüchen 1-3, dadurch gekennzeichnet, daß als Komponente b, ein hydriertes telecheles Polybutadien- oder Polyisoprenpolyol, Polyesterpolyole aus Polyolen und Polycarbonsäuren oder deren Anhydriden, Umsetzungsprodukte von Ringethern mit Alkylenoxiden oder - wenn die Komponente 2) ein

6

Polyether-Polyol und die Komponente 3) ein Polyepoxid ist- ein Oxalkylierungsprodukt von Wasser, Ammoniak 1-4 wertigen Alkoholen verwendet werden.

5. Formmassen nach Ansprüchen 1-4, dadurch gekennzeiennet, daß als Komponente c, Polyglycidylether mehrwertiger Phenole oder mehrwertiger Alkohole, Glycidylester mehrwertiger aromatischer, aliphatischer oder cycloaliphatischer Polycarbonsäuren oder Copolymerisate von Glycidyl(meth)acrylat mit einfach ungesättigter Monomeren oder Anhydridverbindungen aus Addukten von Maleinsäureanhydrid und Polybutadienölen mit Molekulargewichten von 200-4000 oder Copolymere von Maleinsäureanhydrid mit $\alpha,\beta$ einfach ungesättigten Monomeren verwendet werden, deren Schmelzpunkte bzw. Erweichungsbereiche unter 300°C liegen.

6. Formmassen nach Ansprüchen 1-5, dadurch gekennzeichnet, daß als Polyamide Polyamid-6, -6,6 -6,9, -6,10, -6,12, -11, -12 oder entsprechende Copolyamide, gegebenenfalls in Abmischung mit bis zu 30 Gew.-% eines elastifizierenden Polymerisats, eingesetzt werden.

7. Formmassen nach Ansprüchen 1-6, die durch Abmischen der Komponenten 1) - 3) und gegebenenfalls üblichen Hilfs- und Zuschlagstoffen in Schneckenmaschinen hergestellt werden.

8. Formkörper aus Formmassen nach Ansprüchen 1-7.


## Claims

1. Thermoplastically processible polyamide moulding compositions produced from
1) 70-98.95 % by weight of a thermoplastically processible polyamide,
2) 1-29.95 % by weight of at least one long-chain polyester, polyether or hydrocarbon polyol with a number average of the molecular weight (Mn) of 500-20,000, a softening point of $\leq 100°C$ and a functionality of 1-4 and
3) 0.05 to 5 % by weight of at least one polyanhydride with a functionality of at least 5 and/or polyepoxide and optionally customary auxiliaries and additives, wherein the sum of components 1 - 3 must always be 100 % by weight and wherein, if component 2) is a polyether polyol and component 3) is a polyepoxide, an alkoxylation product of water, ammonia or 1-4-hydric alcohols, or a polyether prepared from cyclic ethers or their reaction products with alkylene oxide, are used as the polyether polyol.

2. Moulding compositions according to Claim 1 characterised in that they are produced from
85-97.9 % by weight of component 1),
2-14.9 % by weight of component 2) and
0.1-3 % by weight of component 3).

3. Moulding compositions according to Claim 1 or 2, characterised in that they are produced from
92-96.9 % by weight of component 1),
3-7.9 % by weight of component 2) and
0.1-3 % by weight of component 3).

4. Moulding compositions according to Claims 1-3, characterised in that a hydrogenated telechelic polybutadiene or polyisoprene polyol, polyester polyols of polyols and polycarboxylic acids or their anhydrides, reaction products of cyclic ethers with alkylene oxides or - if component 2) is a polyether polyol and component 3) is a polyepoxide- an alkoxylation product of water, ammonia or 1-4-hydric alcohols, are used as component b.

5. Moulding compositions according to Claims 1-4, characterised in that polyglycidyl ethers of polyhydric phenols or polyhydric alcohols, glycidylesters of polybasic, aromatic, aliphatic or cycloaliphatic polycarboxylic acids or copolymers of glycidyl (meth)acrylate with mono-unsaturated monomer or anhydride compounds of adducts of maleic anhydride and polybutadiene oils with molecular weights of 200-4000 or copolymers of maleic anhydride with $\alpha,\beta$-mono-unsaturated monomers, whose melting points or softening ranges are below 300°C, are used as component c.

6. Moulding compositions according to Claims 1-5, characterised in that polyamide-6, -6,6 -6,9, -6,10, -6,12, -11 or -12 or corresponding copolyamides, optionally mixed with up to 30 % by weight of an elasticising polymer, are used as the polyamides.

7. Moulding compositions according to Claims 1-6, which are produced by mixing components 1) - 3) and optionally customary auxiliaries and additives in screw machines.

8. Mouldings produced from moulding compositions according to Claims 1-7.


## Revendications

1. Mélanges à mouler à base de polyamides, susceptibles d'une mise en oeuvre thermoplastique, produits a partir de
1) 70 à 98,95 % en poids d'un polyamide susceptible de mise en oeuvre thermoplastique,
2) 1-29,95 % en poids d'au moins un polyester-, polyéther- ou hydrocarbure-polyol à longue chaîne ayant une moyenne en nombre (Mn) du poids moléculaire de 500 à 20 000, un point de ramollissement inférieur ou égal à 100°C et une fonctionnalité de 1 à 4 et

3) 0,05 à 5 % en poids d'au moins un polyanhydride à fonctionnalité au moins égale à 5 et/ou d'un polyépoxyde et le cas échéant des adjuvants et additifs classiques,

la somme des composants 1 à 3 devant toujours être égale à 100 % en poids et

au cas où le composant 2) est un polyéther-polyol et où le composant 3) est un polyépoxyde, on utilise comme polyéther-polyol un produit d'oxalkylation de l'eau, de l'ammoniac ou d'alcools mono- à tétravalents ou un polyéther préparé à partir d'éthers cycliques ou de leurs produits de réaction avec un oxyde d'alkylène.

2. Mélanges suivant la revendication 1, caractérisés en ce qu'ils sont préparés à partir de

85-97,9 % en poids du composant 1)

2-14,9 % en poids du composant 2) et

0,1-3 % en poids du composant 3).

3. Mélanges à mouler suivant la revendication 1 ou 2, caractérisés en ce qu'ils sont préparés à partir de

92-96,9 % en poids de composant 1)

3- 7,9 % en poids de composant 2) et

0,1-3 % en poids de composant 3).

4. Mélanges à mouler suivant les revendications 1 à 3, caractérisés en ce qu'on utilise comme composant b) un polybutadiène- ou polyisoprènepolyol téléchélique hydrogéné ou des polyesterpolyols dérivés de polyols et d'acides polycarboxyliques ou de leurs anhydrides, des produits de réaction d'éthers cycliques avec des oxydes d'alkylènes ou bien - lorsque le composant 2) est un polyétherpolyol et le composant 3) est un polyépoxyde - un produit d'oxalkylation de l'eau, de l'ammoniac ou d'alcools mono- à tétravalents.

5. Mélanges à mouler suivant les revendications 1 à 4, caractérisés en ce qu'on utilise comme composant c) des éthers de polyglycidyle de phénols polyvalents ou d'alcools polyvalents, des esters de glycidyle d'acides polycarboxyliques aromatiques, aliphatiques ou cycloaliphatiques polyvalents ou des produits de copolymérisation de (méth)acrylate de glycidyle avec des monomères mono-insaturés ou des composés d'anhydrides dérivés de produits d'addition de l'anhydride d'acide maléique et d'huiles polybutadiéniques ayant des poids moléculaires de 200 à 4000 ou des copolymères de l'anhydride d'acide maléique avec des monomères à mono-insaturation $\alpha,\beta$ dont les points de fusion ou les plages de ramollissement sont inférieurs à 300° C.

6. Mélanges à mouler suivant les revendications 1 à 5, caractérisés en ce qu'on utilise comme polyamides le polyamide-6, -6,6, -6,9, -6,10, -6,12, -11, -12 ou des copolyamides correspondants, le cas échéant en mélange avec jusqu'à 30 % en poids d'un produit de polymérisation conférant l'élasticité.

7. Mélanges à mouler suivant les revendications 1 à 6, qui sont produits en mélangeant les composants 1) à 3) et le cas échéant des adjuvants et des additifs classiques dans des machines à vis sans fin.

8. Des pièces moulées obtenues à partir de mélanges à mouler suivant les revendications 1 à 7.